# EUROPEAN PATENT SPECIFICATION

(11) **EP 3 266 640 B1**
(45) Date of publication and mention of the grant of the patent: **19.06.2019**
(21) Application number: 16178245.3
(22) Date of filing: 06.07.2016
(51) Int. Cl.: B60K 37/06

(54) **MULTI MODE SCREEN DEVICE FOR A VEHICLE AND A METHOD FOR PROVIDING A MULTI MODE SCREEN DEVICE IN A VEHICLE**
MEHRFACHMODUS-BILDSCHIRMVORRICHTUNG FÜR EIN FAHRZEUG UND VERFAHREN ZUR BEREITSTELLUNG EINER MEHRFACHMODUS-BILDSCHIRMVORRICHTUNG IN EINEM FAHRZEUG
DISPOSITIF D'ÉCRAN À MODE MULTIPLE POUR UN VÉHICULE ET PROCÉDÉ PERMETTANT DE FOURNIR UN DISPOSITIF À ÉCRAN MULTIMODE DANS UN VÉHICULE

(43) Date of publication of application: 10.01.2018
(73) Proprietor: Volvo Car Corporation, 40 531 Göteborg (SE)
(72) Inventor: Göthlin, Mr. Jonas, 42343 Torslanda (SE); Josefsson, Andreas, 42161 Västra Frölunda (SE)
(74) Representative: Valea AB

(56) References cited:
- JP-A- H1 151 662
- US-A1- 2014 156 133

## Description

### TECHNICAL FIELD

The present disclosure relates to a multi mode screen device for a vehicle comprising a display screen unit, where the display screen unit is configured to switch an operational state from a first operational mode related to a manual vehicle driving functionality and a second operational mode related to an autonomous vehicle drive functionality. The disclosure further relates to a method for providing a multi mode screen device in a vehicle, a vehicle comprising a multi mode screen device, a computer program and a computer program product.

### BACKGROUND

An autonomous vehicle is a vehicle capable of sensing its environment and navigating without the use of human input. Such vehicles are often capable of transitioning from an autonomous driving mode, where the vehicle has an autonomous driving functionality, and a manual driving mode, where the vehicle has a manual driving functionality in which a driver manually operates the vehicle. It is envisioned that autonomous driving only will be allowed on roads or in zones that are preapproved or certified. When driving the vehicle to such a certified road for autonomous driving, the driver will have to control the vehicle and when entering the certified road the vehicle can enter the autonomous driving mode. In the autonomous driving mode, the driver of the vehicle may engage in activities that are not related to the driving of the vehicle, such as for example resting, working or using multimedia applications.

The autonomous vehicle is typically equipped with different input devices for receiving driving related commands, such as steering wheel and foot pedals. Such input devices are engaged when the vehicle is in the manual driving mode. Other input devices used for controlling the vehicle are control knobs or buttons that are used for controlling specific vehicle functions, such as for example climate control functions, sound or phone systems and navigation. The status of these vehicle functions are often monitored on a screen unit comprising a display screen that is specifically adapted for giving the driver a good overview of the different vehicle functions. Many vehicles are today also equipped with multimedia systems providing various forms of content, for example video or audio, to occupants of the vehicle. Such multimedia systems can also be beneficial for drivers of the vehicle when the vehicle is in the autonomous driving mode, where driver distraction is not a safety concern in certain phases of the operation of the vehicle. These multimedia systems typically involve one or more display screens for providing desired multimedia information to the viewer. The display screen used for giving the driver a good overview of the different vehicle functions is in today's vehicles are not suitable for viewing multimedia content due to the limited space available for the display screen and due to the fact that many multimedia applications need a different display format.

There is thus a need in autonomous vehicles to provide an improved display screen suitable for both viewing vehicle functions when the vehicle is in the manual driving mode as well as multimedia content when the vehicle is in the autonomous driving mode.

The document US 2014/156133 A1 discloses the preamble of claim 1.

### SUMMARY

An object of the present disclosure is to provide a multi mode screen device for a vehicle and a method for providing a multi mode screen device in a vehicle, where the previously mentioned problems are avoided.

This object is at least partly achieved by the features of the independent claim. The dependent claims contain further developments of the multi mode screen device and the method for providing a multi mode screen device.

The disclosure concerns a multi mode screen device for a vehicle, comprising a display screen unit with a display screen, where the display screen unit is configured to switch an operational state between a first operational mode related to a manual vehicle driving functionality and a second operational mode related to an autonomous vehicle driving functionality, where the display screen has a portrait orientation in the first operational mode and a landscape orientation in the second operational mode, where the display screen unit is adapted to be rotatably displaced between the portrait orientation and the landscape orientation. Advantages with these features are that the display screen unit can be adapted to different driving situations and provide different types of information depending on the driving mode of the vehicle, where the multi mode screen device automatically changes the orientation of the display screen. when the vehicle is changing the driving mode. Further, the display screen of the display screen unit can be utilized in an efficient way by using the full screen area both in the portrait and landscape orientations.

According to an aspect of the disclosure, the display screen unit is adapted to be automatically displaced between the portrait orientation and the the landscape orientation when the vehicle is switching the operational state between the first and the second operational modes. Advantages with this feature are that the driver does not have to manually initiate any actions in order to change the orientation of the display screen unit and that the display screen unit from the orientation if the display screen is indicating the driving mode of the vehicle.

According to an aspect of the disclosure, the display screen unit is attached to an interior panel of the vehicle via a translation unit that is providing the rotational displacement to the display screen unit. An advantage with these features is that a simple installation of the display screen unit can be achieved through a construction with few parts involved.

According to an aspect of the disclosure, the translation unit comprises an inner hollow shaft, an outer hollow shaft and a holding unit, where the inner hollow shaft is arranged with a first threaded area on the outer envelope surface, the outer hollow shaft is arranged with a second threaded area on the inner envelope surface, where the first threaded area is in engagement with the second threaded area, and the holding unit has a cylindrical opening for the inner hollow shaft and the outer hollow shaft. An advantage with these features is that the multi mode screen device can be constructed in a compact format allowing the display screen unit to be mounted close to or integrated within the interior panel of the vehicle. A further advantage is that cables needed for the display screen unit can be installed through the hollow shafts.

According to an aspect of the disclosure, the outer hollow shaft has one or more guiding protrusions and that the holding unit has one or more guiding tracks for the one or more guiding protrusions, where the one or more guiding protrusions and the one or more guiding tracks are provided to guide the rotational displacement and an axial displacement of the display screen unit. An advantage with these features is that the display screen unit can be translated in both an axial direction and in a rotational direction. This is especially of importance when mounting the multi mode screen device integrated in the interior panel of the vehicle.

According to an aspect of the disclosure, the display screen unit is displaced between the landscape orientation and the portrait orientation with an electrical motor that is rotating the inner hollow shaft via a drive shaft and a pinion. An advantage with these features is that the displacement of the display screen unit can be controlled in an efficient way with the electric motor connected to the translation unit.

According to an aspect of the disclosure, the display screen is a touch screen and the electrical motor is adapted to vibrate the display screen unit in order to provide haptic feedback to the driver of the vehicle, when an input is made on the touch screen. An advantage with these features is that the the user of the screen can receive haptic feedback on input commands through a slight vibration.

According to an aspect of the disclosure, a control unit is controlling the displacement of the display screen unit. An advantage with this feature is that the displacement of the display screen unit can be controlled to shift in a desired way between the portrait and landscape orientations.

The disclosure further comprises a method for providing a multi mode screen device in a vehicle, wherein the multi mode screen device comprises a display screen unit with a display screen, the method comprising the steps; switching an operational state of the display screen unit between a first operational mode related to a manual vehicle driving functionality and a second operational mode related to an autonomous vehicle driving functionality, where the display screen has a portrait orientation in the first operational mode and a landscape orientation in the second operational mode and rotatably displacing the display screen unit between the landscape orientation and the the portrait orientation. Advantages with these features are that the display screen unit can be adapted to different driving situations and provide different types of information depending on the driving mode of the vehicle. Further, the display screen of the display screen unit can be utilized in an efficient way by using the full screen area both in the portrait and landscape orientations.

According to an aspect of the disclosure, the method involves that the display screen unit is adapted to be automatically displaced between the portrait orientation and the the landscape orientation when the vehicle is switching the operational state between the first and the second operational modes. Advantages with this feature are that the driver does not have to manually initiate any actions in order to change the orientation of the display screen unit and that the display screen unit from the orientation if the display screen is indicating the driving mode of the vehicle.

According to an aspect of the disclosure, the display screen unit is axially displaced in a rear direction R, with regard to the forward travel direction of the vehicle, before being rotatably displaced when changing from the portrait orientation to the landscape orientation. An advantage with these features is that the display screen unit can be translated in both an axial direction and in a rotational direction. This is especially of importance when mounting the multi mode screen device integrated within the interior panel of the vehicle.

According to an aspect of the disclosure, the display screen unit is rotatably displaced before being axially displaced in a front direction F, with regard to the forward travel direction of the vehicle, when changing from the landscape orientation to the portrait orientation. An advantage with these features is that the display screen unit can be translated in both an axial direction and in a rotational direction. This is especially of importance when mounting the multi mode screen device integrated within the interior panel of the vehicle.

The disclosure concerns a vehicle, wherein the vehicle comprises a multi mode screen device, a computer program comprising program code means for performing the method steps when said program is run on a computer, and a computer program product comprising program code means stored on a computer readable medium for performing the method steps when said program product is run on a computer.

### BRIEF DESCRIPTION OF DRAWINGS

The invention will be described in greater detail in the following, with reference to the attached drawings, in which
- Fig. 1: shows schematically, a cross section of a first embodiment of the multi mode screen device according to the disclosure,
- Fig. 2a-b: show schematically, front views in different modes of the multi mode screen device according to the disclosure,
- Fig. 3a-b: shows schematically, cross sections of a second embodiment of the multi mode screen device according to the disclosure,
- Fig. 4: Shows schematically, in a perspective view, a translation unit of a second embodiment of the multi mode screen device according to the disclosure.

### DESCRIPTION OF EXAMPLE EMBODIMENTS

Various aspects of the disclosure will hereinafter be described in conjunction with the appended drawings to illustrate and not to limit the disclosure, wherein like designations denote like elements, and variations of the described aspects are not restricted to the specifically shown embodiments, but are applicable on other variations of the disclosure. Directional references, such as front and rear, relate to the normal driving direction of the vehicle.

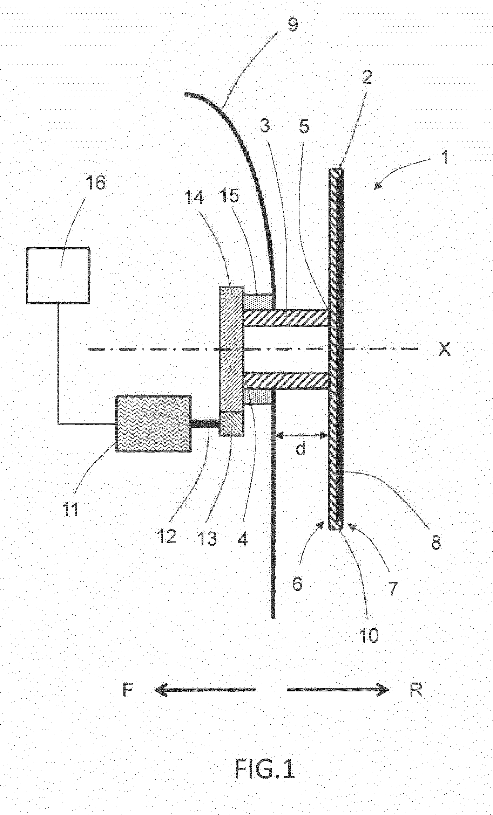

Figure 1 schematically shows a cross section of a multi mode screen device 1 for a vehicle, and especially for an autonomous vehicle, comprising a display screen unit 2.

An autonomous vehicle has the capability to sense its environment and navigate without use of human input. The autonomous vehicle may be capable of transitioning from an autonomous driving mode, where the vehicle has an autonomous driving functionality, and a manual driving mode, where the vehicle has a manual driving functionality in which a driver manually operates the vehicle. When driving the vehicle in the manual driving mode, the driver is controlling the vehicle and when desired the vehicle can enter the autonomous driving mode. In the autonomous driving mode, the driver of the vehicle may engage in activities that are not related to the driving of the vehicle, such as for example resting, working or using multimedia applications.

The display screen unit 2 is configured to switch an operational state between a first operational mode related to the manual vehicle driving functionality in the manual driving mode, and a second operational mode related to an autonomous vehicle drive functionality in the autonomous driving mode.

The vehicle may be equipped with different input devices for receiving driving related commands, such as for example a steering wheel and foot pedals. The input devices are engaged when the vehicle is in the manual driving mode. Other input devices used for controlling the vehicle may be control knobs or buttons that may be used for controlling specific vehicle functions, such as for example climate control functions, sound or phone systems and navigation. The status of these and other desired vehicle functions are monitored on the display screen unit 2 in order to give the driver a good overview of the different vehicle functions.

The multi mode screen device 1 further comprises a translation unit 3 connected to the display screen unit 2. A first end 4 of the translation unit 3 is mounted to the interior of the vehicle and a second end 5 of the translation unit 3 is connecting the translation unit 3 to the display screen unit 2. When the multi mode screen device 1 is mounted in the vehicle, the translation unit 3 has the capability to change the position of the display screen unit 2 when the vehicle is transitioning from the manual driving mode, where the vehicle has a manual driving functionality in which the driver manually operates the vehicle to the autonomous driving mode in which the vehicle has an autonomous driving functionality, or when transitioning from the autonomous driving mode to the manual driving mode. The orientation of the display screen unit 2 may be automatically changed when the vehicle is changing between the driving modes, or as an alternative the driver may initiate the change of orientation of the display screen unit 2.

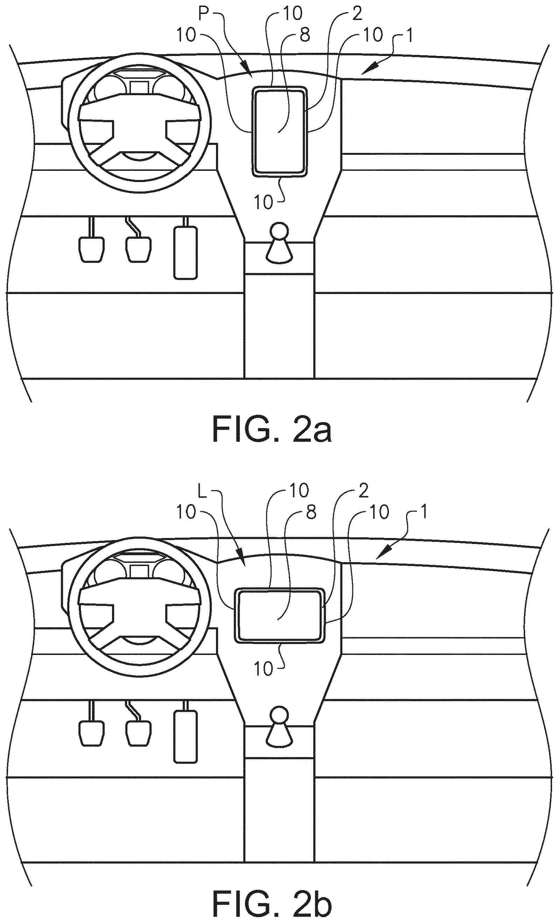

The display screen unit 2 has a front facing side 6 to which the rear end 5 of the translation unit 3 is connected. The display screen unit may be connected to the translation unit 3 with glue, screws or other suitable fastening means. The display screen unit 2 has further a rear facing side 7 with a display screen 8. In this context the front direction F is indicating that the part is directed towards the front end of the vehicle, which direction is also the forward travel direction of the vehicle. The rear direction R is indicating that the part is directed towards the rear end of the vehicle, which is opposite the forward travel direction, see arrows in figure 1. The display screen 8 is thus directed in the rear direction R of the vehicle so that the driver easily can view the information provided. The display screen unit 2 has a rectangular shape, with either sharp or rounded corners, and in the embodiment shown in Figures 2a and 2b, the display screen unit 2 is designed with rounded corners.

The front facing side 6 of the display screen unit 2 may be in the form of a shell structure made of a suitable material, such as for example a plastic material or a metallic material, with four side edges 10 extending from the front facing side 6 in the rear direction R, as seen in figures 1, 2a and 2b. The extension of the side edges 10 in the rearward direction is small in relation to the extension of the front facing side 6 and the rear facing side 7 of the display screen unit 2.

The display screen 8 may be either a traditional type of screen that is displaying information to the driver only or a touch screen suitable for interaction with the driver. The touch screen may be a standard touch screen used for multimedia purposes such as for example gaming, watching multimedia videos, listening to multimedia files, surfing the internet or document processing.

In the different driving modes of the vehicle, the multi mode screen device 1 may be used for a vehicle driving functionality, in which the vehicle driving functionality may comprise a driving command, route selection, and/or a vehicle related setting. For example, the driving command may be related to a speed of the vehicle, changing lanes in a road or making a detour with respect to a current route. Other vehicle related functionalities may be related to any controls associated with the vehicle itself, for example, controlling a sound system volume, climate control settings, door, trunk, and/or window locking mechanisms. A vehicle related functionality may even comprise settings outside of the vehicle, for example, controlling the opening and closing of a garage door.

The display screen unit 2 may be configured to operate wirelessly, for example in order to cooperate with other wireless devices used in the vehicle by the driver or occupants. The display screen unit 2 may further comprise a control unit for providing operational functionality to the display screen unit 2. The control unit may be any suitable type of computation unit, for example, a microprocessor, digital signal processor (DSP), field programmable gate array (FPGA), or application specific integrated circuit (ASIC), or any other form of circuitry.

The multi mode screen device 1 is installed in the vehicle and attached to an interior panel 9 of the vehicle, such as for example the center console of the interior panel 9, in order to give the driver of the vehicle a good overview of the display screen 8. Other locations inside the vehicle are also possible for the multi mode screen device 1.

Since the display screen unit 2 is configured to switch an operational state between the first operational mode related to a manual vehicle driving functionality and the second operational mode related to an autonomous vehicle drive functionality and vice versa, the display screen unit 2 is changing its position between the first operational mode and the second operational mode so that information may be displayed in different ways in the different driving modes if desired.

In the first operational mode of the display screen unit 2, when the vehicle is in its manual driving mode, the status of the vehicle functions are monitored on the display screen 8 in a display screen unit 2 orientation that is specifically adapted for giving the driver a good overview of the different vehicle functions. A suitable orientation format for the display screen 8 and the display screen unit 2 in this mode is a portrait orientation P, in which the display screen 8 has an extension in a vertical direction that is larger than the extension in a horizontal direction as seen in figure 2a. This portrait orientation will be suitable for and give more space for menues on the display screen 8.

In the second operational mode of the display screen unit 2, when the vehicle is in its autonomous driving mode, the display screen 8 may instead be used for monitoring other information than vehicle functions, such as for example multimedia applications. Multimedia applications are often produced in a format different than the portrait orientation and therefore it is desirable to use the display screen unit 2 in a different format in the autonomous mode. A suitable orientation format for the display screen 8 and the display screen unit 2 in this mode is a landscape orientation L, in which the display screen 8 has an extension in the horizontal direction that is larger than the extension in the vertical direction as seen in figure 2b.

Any suitable formats can be used for the display screen 8 of the display screen unit 2, where the extension in the vertical direction is different than the extension in the horizontal direction, depending on the orientation in the different modes. Possible aspect ratios for the display screen 8 are for example 4:3 or 16:9. Other aspect ratios are also possible to use for the display screen 8.

In order to change the position of the display screen 8, the translation unit 3 has the capability to rotate the display screen unit 2 so that the display screen 8 can be altered between the portrait and landscape orientations depending on the driving mode. As shown in figure 1, the translation unit 3 can rotate around an axis X in order to change the orientation of the display screen unit 2 with the display screen 8. The translation unit 3 may rotate the display screen unit 2 either in a clockwise direction or in a counterclockwise direction, whatever is most suitable. As shown in figures 2a and 2b, the display screen unit 2 is rotated about 90° between the portrait and landscape orientations. The rotational movement is transferred to the translation unit 3 from drive means in the form of an electric motor 11, via a drive shaft 12, a geared pinion 13 and a gear unit 14. The drive shaft 12 is in one end connected to the electric motor 11 and in the other end connected to the pinion 13. The pinion 13 is in turn engaged with the gear unit 14, which is fixedly arranged to the translation unit 3. The translation unit 3 is arranged as a hollow shaft to which the display screen unit 2 is connected. The hollow shaft can be used for housing the cables needed for the display screen unit 2. The translation unit 3 is rotatably mounted to the interior panel 9 via a bearing unit 15.

In order to rotate the display screen 8, the electric motor 11 rotates the drive shaft 12 with pinion 13 that in turn rotates the gear unit 14, translation unit 3 and display screen unit 2. The rotational movement is steered by a control unit 16 that secures that the display screen 8 is rotated 90° between the portrait and landscape orientations depending on the driving mode of the vehicle. To secure that the display screen unit 2 can rotate freely, without being disturbed by other objects on the internal panel 9 of the vehicle, the front facing side 6 of the display screen unit 2 is located at a distance d from the outer surface of the interior panel 9. The distance d can be varied depending on the design of the interior panel 9, the translation unit 3 and the display screen unit 2. The electric motor 11 may be arranged to hold the display screen unit 2 firmly in place in the portrait or landscape orientations to secure that the screen is not rotating in an undesired way.

Another possibility with this control arrangement of the display screen unit 2 is to use the electric motor 11 for giving the driver haptic feedback when the display screen 8 is a touch screen. When giving commands via a touch screen it is sometimes desirable to provide feedback to the user of the screen through a slight vibration. Such a haptic feedback can with the described arrangement be provided to the driver via vibrations, where the electric motor 11 is used for vibrating the display screen unit 2.

Other ways for rotating the display screen unit 2 are also possible. For example the electric motor 11 may instead be integrated in the hollow shaft of the translation unit 3 together with a suitable gear and bearing arrangement.

The multi mode screen unit 1 described thus gives the driver the possibility to view the display screen in different modes, where the display screen unit 2 is rotatably displaced between the landscape orientation and the portrait orientation. The display screen unit 2 has a portrait orientation in the first operational mode, where the vehicle is in the manual driving mode in which the driver manually operates the vehicle, and a landscape orientation in the second operational mode, where the vehicle is in the autonomous driving mode in which the vehicle has an autonomous driving functionality. The system can be programmed to automatically change the orientation of the display screen 8 when the vehicle changes between the driving modes. Another possibility would be to change the orientation of the display screen 8 through a command given by the driver, especially in the autonomous driving mode where driver distraction is not a safety concern in certain phases of the operation of the vehicle, if for example the driver would like to change the screen orientation.

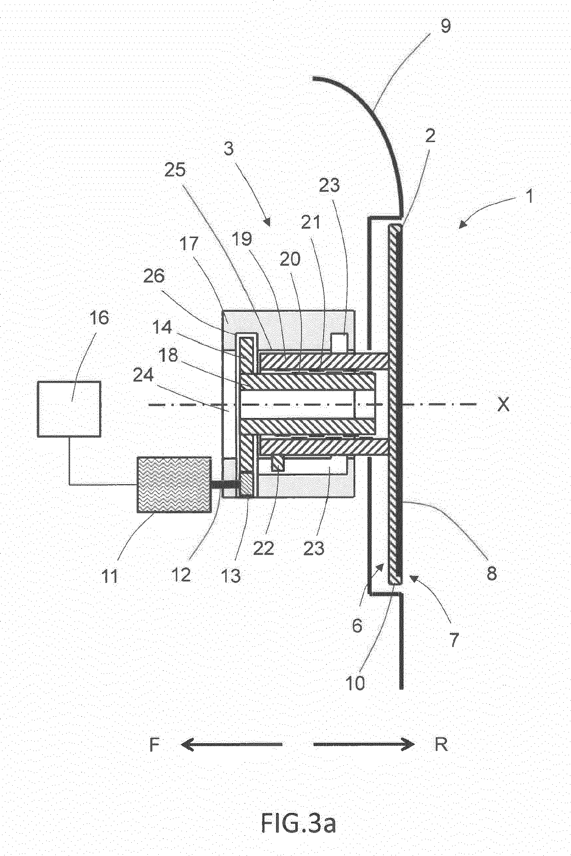

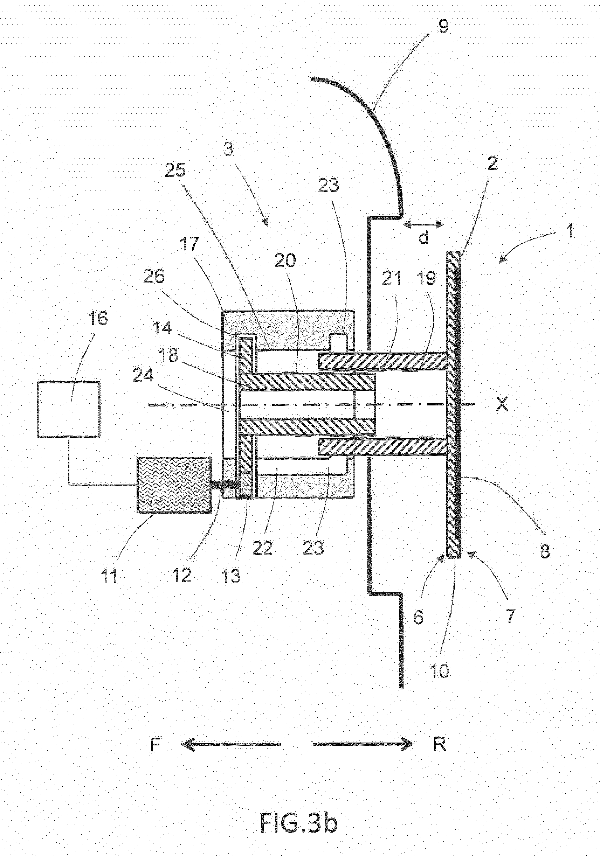

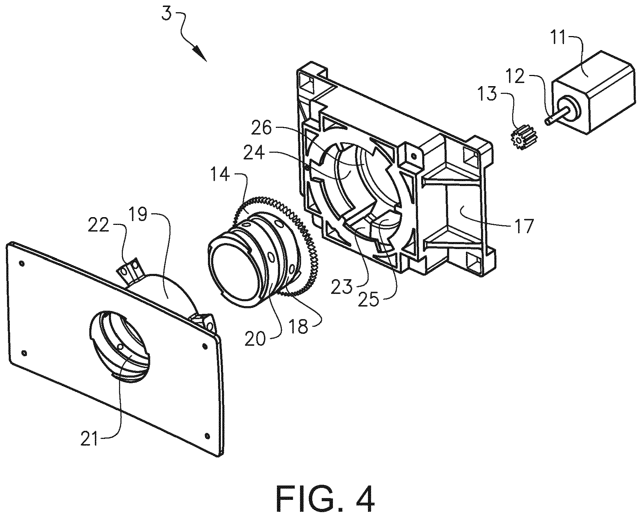

In another embodiment as seen in figures 3a, 3b and 4, the multi mode screen device 1 is integrated within the interior panel 9 of the vehicle, for example in the center console, when the display screen unit 2 with the display screen 8 is in the portrait orientation. This will provide a much more compact and attractive design to the interior panel 9 in the manual driving mode and still give the driver of the vehicle a good overview of the display screen 8, with suitable menues and vehicle information. Other locations inside the vehicle are also possible for the multi mode screen device 1.

When changing from the manual driving mode to the autonomous driving mode, the display screen unit 2 changes its position as described above from the portrait orientation to the landscape orientation. To change the orientation from the portrait orientation to the landscape orientation, the display screen unit 2 must first be translated axially in the rear direction along an axis X so that the display screen unit 2 then can rotate freely in relation to the interior panel 9, in order to be rotated about 90° around the axis X to the desired position. When the display screen unit 2 has been translated in the axial direction rearwards along the axis X, the front facing side 6 of the display screen unit 2 is located at a small distance d from the outer surface of the interior panel 9, as seen in figure 3b. To change the orientation of the display screen 8 from the portrait orientation to the landscape orientation, the display screen unit 2 thus undergoes a combined axial and rotational movement, where the axial movement preceds the rotational movement. In the landscape orientation, the display screen unit 2 is arranged the distance d from the outer surface of the interior panel 9.

When changing from the autonomous driving mode to the manual driving mode, the display screen unit 2 changes its position from the landscape orientation to the portrait orientation. To change the orientation of the display screen unit 2 from the landscape orientation to the portrait orientation, the display screen unit 2 is rotated about 90°. To integrate the display screen unit 2 in the interior panel 9 it is translated axially in the front direction along the axis X so that the display screen unit 2 enters the desired position. To change the orientation of the display screen 8 from the landscape orientation to the portrait orientation where the display screen unit is integrated in the interior panel 9, the display screen unit 2 thus undergoes a combined rotational and axial movement, where the rotational movement preceds the axial movement.

In this embodiment, the translation unit 3 is constructed to provide the combined axial and rotational movement needed for changing the position of the display screen 8 between the portratit and landscape orientations. The translation unit 3 comprises a holding unit 17, an inner hollow shaft 18 and an outer hollow shaft 19. The holding unit 17 is fixedly mounted inside the interior panel 9 and provides a stable support for the multi mode screen device 1.

The inner hollow shaft 18 is provided with a first threaded area 20 on the outer envelope surface of the inner hollow shaft 18. The threads of the first threaded area 20 is arranged to cooperate with threads of a second threaded area 21, which second threaded area 21 is arranged on the inner envelope surface of the outer hollow shaft 19. The dimensions of the first threaded area 21 on the inner hollow shaft 18 are chosen so that the threads easily cooperate with the threads of the second threaded area 21 on the inner envelope surface of the outer hollow shaft 19, in order to provide low friction between the inner hollow shaft 18 and the outer hollow shaft 19 with tolerances that at the same time give the translation unit 3 a stable holding of the display screen unit 2, without too much play between the shafts. The display screen unit 2 is mounted to the rear end of the outer hollow shaft 19.

Both the inner hollow shaft 18 and the outer hollow shaft 19 are arranged inside the holding unit 17, and the outer hollow shaft 19 is threaded upon the inner hollow shaft 18. The inner hollow shaft 18 can rotate inside the holding unit 17 and is fixedly arranged relative the holding unit 17 in the axial direction. The rotational movement is transferred to the inner hollow shaft 18 from drive means in the form of an electric motor 11, via a drive shaft 12 and a geared pinion 13. A gear unit 14 is fixedly arranged on the outer envelope surface at the front end of the inner hollow shaft 18. To hold the inner hollow shaft 18 in place in the axial direction, a circular groove 26 may be arranged in the holding unit, which circular groove 26 is encompassing the gears of the gear unit 14 so that the inner hollow shaft can rotate without being displaced in the axial direction. The drive shaft 12 is in one end connected to the electric motor 11 and in the other end connected to the pinion 13. The electric motor 11 rotates the drive shaft 12 with pinion 13 that in turn rotates the gear unit 14 on the inner hollow shaft 18. The rotational movement of the inner hollow shaft 18 is steered by a control unit 16. The outer hollow shaft 19 is arranged to first translate a distance rearwards in the axial direction along the axis X and then rotate 90° around the axis X when the vehicle is changing from the manual driving mode to the autonomous driving mode. When the vehicle is changing from the autonomous driving mode to the manual driving mode, the outer hollow shaft 19 is arranged to first rotate 90° around the axis X and then translate a distance forward in the axial direction along the axis X.

To secure that the outer hollow shaft 19 can translate in the axial direction and also rotate 90°, the front end of the outer envelope surface of the outer hollow shaft 19 is provided with one or more guiding protrusions 22. The one or more guiding protrusions 22 are cooperating with corresponding one or more guiding tracks 23 arranged in the holding unit 17. Any suitable number of guiding protrusions 22 and corresponding guiding tracks 23 may be chosen in order to achieve the desired result. The holding unit 17 has a cylindrical opening 24 with one or more supporting surfaces 25 that is housing the outer hollow shaft 19 and the inner hollow shaft 18. The outer hollow shaft 19 can slide axially and rotate in relation to the cylindrical opening 24 and the one or more supporting surfaces 25 secure that the outer hollow shaft 19 can change its position in relation to the holding unit 17. There is a small play between the outer envelope surface of the outer hollow shaft 19 and the cylindrical opening 24 with the one or more supporting surfaces 25 so that the outer hollow shaft 19 can slide axially and rotate with low friction but still provide a good support to the display screen unit 2. The one or more guiding tracks 23 are arranged inside the cylindrical opening 24 adjacent the supporting surfaces 25 and extend from the front end of the cylindrical opening 24 in the axial direction rearwards and then in a direction perpendicular to the axial direction along the periphery of the cylindrical opening 24, to allow that the outer hollow shaft 19 can translate both in the axial direction and rotate 90°. The one or more guiding protrusions 22 are designed to fit within the one or more guiding tracks 23.

To change the position of the display screen unit 2 from the portrait orientation to the landscape orientation, the electric motor 11 provides a rotational movement to the inner hollow shaft 18 via the drive shaft 12, the pinion 13 and the gear unit 14. In turn, since the first threaded area 20 of the inner hollow shaft 18 is in engagement with the second threaded area 22 of the outer hollow shaft 19, the outer hollow shaft 19 is translated in the axial direction rearwards. During the axial movement, the interaction between the one or more guiding protrusions 22 of the outer hollow shaft 19 and the one or more guiding tracks 23 of the holding unit 17 prevents the outer hollow shaft 19 from rotating around the axis X. When the outer hollow shaft 19 has reached its desired position in the axial direction, the outer hollow shaft 19 is rotated 90° so that the display screen unit is in the landscape orientation. The one or more guiding tracks 23 are cooperating with the one or more guiding protrusions 22 so that the outer hollow shaft 19 is allowed to rotate, since the one or more guiding tracks 23 first extend from the front end of the cylindrical opening 24 in the axial direction rearwards and then in a direction perpendicular to the axial direction along the periphery of the cylindrical opening 24. The rotational movement can be chosen to either be in the clockwise direction or in the counterclockwise direction depending on what is most suitable to the application.

To change the position of the display screen unit 2 from the landscape orientation to the portrait orientation, the electric motor 11 provides a rotational movement to the inner hollow shaft 18 via the drive shaft 12, the pinion 13 and the gear unit 14, as described above but in an opposite rotational direction. The outer hollow shaft 19 is rotated 90° so that the display screen unit 2 is in the portrait orientation, since the first threaded area 20 of the inner hollow shaft 18 is in engagement with the second threaded area 22 of the outer hollow shaft 19. The one or more guiding tracks 23 are cooperating with the one or more guiding protrusions 22 so that the outer hollow shaft 19 is allowed to rotate to the desired position. When the display screen unit 2 has reached the portrait orientation, the outer hollow shaft 19 is translated axially in the front direction F. During the axial movement, the interaction between the one or more guiding protrusions 22 of the outer hollow shaft 19 and the one or more guiding tracks 23 of the holding unit 17 prevents the outer hollow shaft from rotating around the axis X. When the outer hollow shaft 19 has reached its desired position in the axial direction, the display screen unit is integrated within the interior panel 9.

The rotational movement of the inner hollow shaft 18 and the axial and rotational movement of the outer hollow shaft 19 is steered by the control unit 16 that secures that the display screen 8 is axially displaced and rotated 90° between the portrait and landscape orientations depending on the driving mode of the vehicle.

The outer hollow shaft 19 may at the shaft end in the rear direction be provided with a mounting plate for the display screen unit 2. The display screen unit may be attached to the outer hollow shaft in different ways, such as for example with glue, screws or other suitable fastening means. The mounting plate may be arranged with a hole for receiving cables needed for the display screen unit. The cables can be arraged from the inside of the interior panel 9 to the display screen unit 2 via the cylindrical opening 24 of the holding unit 17, through the inner hollow shaft 18 and the outer hollow shaft 19. The holding unit 17, the inner hollow shaft 18 and the outer hollow shaft 19 can be made of any suitable material, such as a plastic or metallic material providing good stability to the display screen unit 2.

Other ways for rotating the display screen unit 2 are also possible as long as an axial movement and a rotational movement are combined. The electric motor 11 may integrated in a different way and other components may be used to achieve the desired result. As an example two electric motors may instead be used, one for rotating the display screen unit 2 and one for the axial movement. Another possibility would be to have an electric motor for rotating the display screen unit 2 and a linear actuator for the axial movement.

The electric motor 11 can also in this embodiment be used for giving the driver haptic feedback when the display screen 8 is a touch screen. Such a haptic feedback can with the described arrangement be provided to the driver via vibrations, where the electric motor 11 is used for vibrating the display screen unit 2.

As an alternative, the multi mode screen device 1 may be programmed so that the display screen unit 2 can change its position in the autonomous driving mode between the landscape and the portrait orientations without involving the axial movement. The display screen unit 2 is simply rotated between the orientations depending on the input from the driver.

Also in this embodiment, the multi mode screen unit 1 described gives the driver the possibility to view the display screen in different modes, where the display screen unit 2 is displaced between the landscape orientation and the the portrait orientation. The display screen unit 2 has a portrait orientation in the first operational mode, where the vehicle is in the manual driving mode in which the driver manually operates the vehicle, and a landscape orientation in the second operational mode, where the vehicle is in the autonomous driving mode in which the vehicle has an autonomous driving functionality. The system can be programmed to automatically change the orientation of the display screen 8 when the vehicle changes between the driving modes. Another possibility would be to change the orientation of the display screen 8 through a command given by the driver, especially in the autonomous driving mode where driver distraction is not a safety concern in certain phases of the operation of the vehicle, if for example the driver would like to change the screen orientation.

The method steps are preferably performed by a computer program and a computer program product contained and run in the electronic control unit of the vehicle. The computer program product may be embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

It will be appreciated that the above description is merely exemplary in nature and is not intended to limit the present disclosure, its application or uses. While specific examples have been described in the specification and illustrated in the drawings, it will be understood by those of ordinary skill in the art that various changes may be made and equivalents may be substituted for elements thereof without departing from the scope of the present disclosure as defined in the claims. Furthermore, modifications may be made to adapt a particular situation or material to the teachings of the present disclosure without departing from the essential scope thereof. Therefore, it is intended that the present disclosure not be limited to the particular examples illustrated by the drawings and described in the specification as the best mode presently contemplated for carrying out the teachings of the present disclosure, but that the scope of the present disclosure will include any embodiments falling within the foregoing description and the appended claims. Reference signs mentioned in the claims should not be seen as limiting the extent of the matter protected by the claims, and their sole function is to make claims easier to understand.

### REFERENCE SIGNS

1: Multi mode screen device
2: Display screen unit
3: Translation unit
4: Front end
5: Rear end
6: Front facing side
7: Rear facing side
8: Display screen
9: Interior panel
10: Side edges
11: Electric motor
12: Drive shaft
13: Pinion
14: Gear unit
15: Bearing unit
16: Control unit
17: Holding unit
18: Inner hollow shaft
19: Outer hollow shaft
20: First threaded area
21: Second threaded area
22: Guiding protrusions
23: Guiding tracks
24: Cylindrical opening
25: Supporting surfaces
26: Circular groove

## Claims

1. A multi mode screen device (1) for a vehicle, comprising a display screen unit (2) with a display screen (8), where the display screen unit (2) is configured to switch an operational state between a first operational mode related to a manual vehicle driving functionality and a second operational mode related to an autonomous vehicle driving functionality;
**characterized in that** the display screen (8) has a portrait orientation (P) in the first operational mode and a landscape orientation (L) in the second operational mode, where the display screen unit (2) is adapted to be rotatably displaced between the portrait orientation (P) and the the landscape orientation (L).

2. A multi mode screen device (1) according to claim 1,
**characterized in that** the display screen unit (2) is adapted to be automatically displaced between the portrait orientation (P) and the the landscape orientation (L) when the vehicle is switching the operational state between the first and the second operational modes.

3. A multi mode screen device (1) according to claim 1 or 2,
**characterized in that** the display screen unit (2) is attached to an interior panel (9) of the vehicle via a translation unit (3) that is providing the rotational displacement to the display screen unit (2).

4. A multi mode screen device (1) according to claim 3,
**characterized in that** the translation unit (3) comprises an inner hollow shaft (18), an outer hollow shaft (19) and a holding unit (17), where;
the inner hollow shaft (18) is arranged with a first threaded area (20) on the outer envelope surface;
the outer hollow shaft (19) is arranged with a second threaded area (21) on the inner envelope surface, where the first threaded area (20) is in engagement with the second threaded area (21);
and the holding unit (17) has a cylindrical opening (24) for the inner hollow shaft (18) and the outer hollow shaft (19).

5. A multi mode screen device (1) according to claim 4,
**characterized in that** an the outer hollow shaft (19) has one or more guiding protrusions (22) and that the holding unit (17) has one or more guiding tracks (23) for the one or more guiding protrusions (22), where the one or more guiding protrusions (22) and the one or more guiding tracks (23) are provided to guide the rotational displacement and an axial displacement of the display screen unit (2).

6. A multi mode screen device (1) according to claims 4 or 5,
**characterized in that** the display screen unit (2) is displaced between the landscape orientation (L) and the portrait orientation (P) with an electrical motor (11) that is rotating the inner hollow shaft (18) via a drive shaft (12) and a pinion (13).

7. A multi mode screen device (1) according to claim 6,
**characterized in that** the display screen (8) is a touch screen and that the electrical motor (11) is adapted to vibrate the display screen unit (2) in order to provide haptic feedback to the driver of the vehicle, when an input is made on the touch screen.

8. A multi mode screen device (1) according to any of the preceding claims,
**characterized in that** a control unit (16) is controlling the displacement of the display screen unit (2).

9. A method for providing a multi mode screen device (1) in a vehicle, wherein the multi mode screen device comprises a display screen unit (2) with a display screen (8), the method comprising the steps;
switching an operational state of the display screen unit (2) between a first operational mode related to a manual vehicle driving functionality and a second operational mode related to an autonomous vehicle driving functionality, where the display screen (8) has a portrait orientation (P) in the first operational mode and a landscape orientation (L) in the second operational mode;
rotatably displacing the display screen unit (2) between the portrait orientation (P) and the the landscape orientation (L).

10. A method for providing a multi mode screen device (1) in a vehicle according to claim 9,
wherein the the display screen unit (2) is adapted to be automatically displaced between the portrait orientation (P) and the the landscape orientation (L) when the vehicle is switching the operational state between the first and the second operational modes.

11. A method for providing a multi mode screen device (1) in a vehicle according to claim 9 or 10,
wherein the display screen unit (2) is axially displaced in a rear direction (R), with regard to the forward travel direction of the vehicle, before being rotatably displaced when changing from the portrait orientation (P) to the landscape orientation (L).

12. A method for providing a multi mode screen device (1) in a vehicle according to claim 9 or 10,
wherein the display screen unit (2) is rotatably displaced before being axially displaced in a front direction (F), with regard to the forward travel direction of the vehicle, when changing from the landscape orientation (L) to the portrait orientation (P).

13. Vehicle, wherein the vehicle (1) comprises a multi mode screen device (1) according to any of claims 1-8.

14. A computer program comprising program code means for performing all the steps of anyone of the claims 9-12 when said program is run on a computer.

15. A computer program product comprising program code means stored on a computer readable medium for performing all the steps of any one of the claims 9-12 when said program product is run on a computer.

## Patentansprüche

1. Mehrfachmodus-Bildschirmvorrichtung (1) für ein Fahrzeug (2), die eine Anzeigebildschirmeinheit (2) mit einem Anzeigebildschirm (8) umfasst, wobei die Anzeigebildschirmeinheit (2) zum Wechseln eines Betriebszustands zwischen einem ersten Betriebsmodus, der mit einer manuellen Fahrzeugfahrfunktionalität in Beziehung steht, und einem zweiten Betriebsmodus, der mit einer autonomen Fahrzeugfahrfunktionalität in Beziehung steht, konfiguriert ist;
**dadurch gekennzeichnet, dass** der Anzeigebildschirm (8) im ersten Betriebsmodus ein Hochformat (P) und im zweiten Betriebsmodus ein Querformat (L) aufweist, wobei die Anzeigebildschirmeinheit (2) ausgelegt ist, um zwischen dem Hochformat (P) und dem Querformat (L) drehverschoben zu werden.

2. Mehrfachmodus-Bildschirmvorrichtung (1) nach Anspruch 1,
**dadurch gekennzeichnet, dass** die Anzeigebildschirmeinheit (2) ausgelegt ist, um automatisch zwischen dem Hochformat (P) und dem Querformat (L) verschoben zu werden, wenn das Fahrzeug den Betriebszustand zwischen dem ersten und dem zweiten Betriebsmodus wechselt.

3. Mehrfachmodus-Bildschirmvorrichtung (1) nach Anspruch 1 oder 2, **dadurch gekennzeichnet, dass** die Anzeigebildschirmeinheit (2) über eine Translationseinheit (3), welche die Drehverschiebung für die Anzeigebildschirmeinheit (2) bereitstellt, an einer Innenverkleidung (9) angebracht ist.

4. Mehrfachmodus-Bildschirmvorrichtung (1) nach Anspruch 3,
**dadurch gekennzeichnet, dass** die Translationseinheit (3) eine innere Hohlwelle (18), eine äußere Hohlwelle (19) und eine Halteeinheit (17) umfasst, wobei die innere Hohlwelle (18) mit einem ersten Gewindebereich (20) auf der Außenmantelfläche ausgelegt ist;
die äußere Hohlwelle (19) mit einem zweiten Gewindebereich (21) auf der Innenmantelfläche ausgelegt ist, wobei der erste Gewindebereich (20) mit dem zweiten Gewindebereich (21) in Eingriff steht;
und die Halteeinheit (17) eine zylindrische Öffnung (24) für in innere Hohlwelle (18) und die äußere Hohlwelle (19) aufweist.

5. Mehrfachmodus-Bildschirmvorrichtung (1) nach Anspruch 4,
**dadurch gekennzeichnet, dass** die äußere Hohlwelle (19) einen oder mehrere Führungsvorsprünge (22) aufweist, und dass die Halteeinheit (17) eine oder mehrere Führungsspuren (23) für den einen oder die mehreren Führungsvorsprünge (22) aufweist, wobei der eine oder die mehreren Führungsvorsprünge (22) und die eine oder die mehreren Führungssspuren (23) zum Führen der Drehverschiebung und einer Axialverschiebung der Anzeigebildschirmeinheit (2) vorgesehen sind.

6. Mehrfachmodus-Bildschirmvorrichtung (1) nach Anspruch 4 oder 5, **dadurch gekennzeichnet, dass** die Anzeigebildschirmeinheit (2) mit einem Elektromotor (11), der die innere Hohlwelle (18) über eine Antriebswelle (12) und ein Ritzel (13) dreht, zwischen dem Querformat (L) und dem Hochformat (P) verschoben wird.

7. Mehrfachmodus-Bildschirmvorrichtung (1) nach Anspruch 6,
**dadurch gekennzeichnet, dass** der Anzeigebildschirm (8) ein Berührungsbildschirm ist, und dass der Elektromotor (11) so ausgelegt ist, dass er die Anzeigebildschirmeinheit (2) in Schwingung versetzt, um eine haptische Rückmeldung für den Fahrer des Fahrzeugs bereitzustellen, wenn eine Eingabe auf dem Berührungsbildschirm vorgenommen wird.

8. Mehrfachmodus-Bildschirmvorrichtung (1) nach einem der vorhergehenden Ansprüche,
**dadurch gekennzeichnet, dass** eine Steuereinheit (16) die Verschiebung der Anzeigebildschirmeinheit (2) steuert.

9. Verfahren zur Bereitstellung einer Mehrfachmodus-Bildschirmvorrichtung (1) in einem Fahrzeug, wobei die Mehrfachmodus-Bildschirmvorrichtung eine Anzeigebildschirmeinheit (2) mit einem Anzeigebildschirm (8) umfasst, und das Verfahren die folgenden Schritte umfasst:
Wechseln eines Betriebszustands der Anzeigebildschirmeinheit (2) zwischen einem ersten Betriebsmodus, der mit einer manuellen Fahrzeugfahrfunktionalität in Beziehung steht, und einem zweiten Betriebsmodus, der mit einer autonomen Fahrzeugfahrfunktionalität in Beziehung steht, wobei der Anzeigebildschirm (8) im ersten Betriebsmodus ein Hochformat (P) und im zweiten Betriebsmodus ein Querformat (L) aufweist;
Drehverschieben der Anzeigebildschirmeinheit (2) zwischen dem Hochformat (P) und dem Querformat (L).

10. Verfahren zur Bereitstellung einer Mehrfachmodus-Bildschirmvorrichtung (1) in einem Fahrzeug nach Anspruch 9,
wobei die Anzeigebildschirmeinheit (2) ausgelegt ist, um automatisch zwischen dem Hochformat (P) und dem Querformat (L) verschoben zu werden, wenn das Fahrzeug den Betriebszustand zwischen dem ersten und dem zweiten Betriebsmodus wechselt.

11. Verfahren zur Bereitstellung einer Mehrfachmodus-Bildschirmvorrichtung (1) in einem Fahrzeug nach Anspruch 9 oder 10,
wobei die Anzeigebildschirmeinheit (2) in einer Rückwärtsrichtung (R) in Bezug auf eine Vorwärtsbewegungsrichtung des Fahrzeugs axial verschoben wird, bevor sie beim Wechseln vom Hochformat (P) zum Querformat (L) drehverschoben wird.

12. Verfahren zur Bereitstellung einer Mehrfachmodus-Bildschirmvorrichtung (1) in einem Fahrzeug nach Anspruch 9 oder 10,
wobei die Anzeigebildschirmeinheit (2) drehverschoben wird, bevor sie beim Wechseln vom Hochformat (P) zum Querformat (L) in einer Vorwärtsrichtung (F) in Bezug auf eine Vorwärtsbewegungsrichtung des Fahrzeugs axial verschoben wird.

13. Fahrzeug, wobei das Fahrzeug (1) eine Mehrfachmodus-Bildschirmvorrichtung (1) nach einem der Ansprüche 1 bis 8 umfasst.

14. Computerprogramm, umfassend Programmcodemittel zum Ausführen aller Schritte nach einem der Ansprüche 9 bis 12, wenn das Programm auf einem Computer ausgeführt wird.

15. Computerprogrammprodukt, umfassend Programmcodemittel, die auf einem computerlesbaren Medium gespeichert sind, zum Ausführen aller Schritte nach einem der Ansprüche 9 bis 12, wenn das Programmprodukt auf einem Computer ausgeführt wird.

## Revendications

1. Dispositif d'écran multimode (1) pour un véhicule, comprenant une unité d'écran d'affichage (2) avec un écran d'affichage (8), où l'unité d'écran d'affichage (2) est configurée pour commuter un état de fonctionnement entre un premier mode de fonctionnement relatif à une fonctionnalité de conduite manuelle de véhicule et un second mode de fonctionnement relatif à une fonctionnalité de conduite autonome de véhicule ; **caractérisé en ce que** l'écran d'affichage (8) a une orientation portrait (P) dans le premier mode de fonctionnement et une orientation paysage (L) dans le second mode de fonctionnement, où l'unité d'écran d'affichage (2) est adaptée pour être déplacée par rotation entre l'orientation portrait (P) et l'orientation paysage (L).

2. Dispositif d'écran multimode (1) selon la revendication 1,
**caractérisé en ce que** l'unité d'écran d'affichage (2) est adaptée pour être automatiquement déplacée entre l'orientation portrait (P) et l'orientation paysage (L) lorsque le véhicule commute l'état de fonctionnement entre le premier mode de fonctionnement et le second mode de fonctionnement.

3. Dispositif d'écran multimode (1) selon la revendication 1 ou la revendication 2,
**caractérisé en ce que** l'unité d'écran d'affichage (2) est fixée à un panneau intérieur (9) du véhicule par l'intermédiaire d'une unité de translation (3) qui assure le déplacement rotatif vers l'unité d'écran d'affichage (2).

4. Dispositif d'écran multimode (1) selon la revendication 3,
**caractérisé en ce que** l'unité de translation (3) comprend un arbre creux intérieur (18), un arbre creux extérieur (19) et une unité de maintien (17), où :
l'arbre creux intérieur (18) est agencé avec une première zone filetée (20) sur la surface de l'enveloppe extérieure ;
l'arbre creux extérieur (19) est agencé avec une seconde zone filetée (21) sur la surface de l'enveloppe intérieure, la première zone filetée (20) étant en prise avec la seconde zone filetée (21) ;
et l'unité de maintien (17) présente une ouverture cylindrique (24) pour l'arbre creux intérieur (18) et l'arbre creux extérieur (19).

5. Dispositif d'écran multimode (1) selon la revendication 4,
**caractérisé en ce que** l'arbre creux extérieur (19) comporte une ou plusieurs saillies de guidage (22) et **en ce que** l'unité de maintien (17) comporte une ou plusieurs pistes de guidage (23) pour les une ou plusieurs saillies de guidage (22), où les une ou plusieurs saillies de guidage (22) et les une ou plusieurs pistes de guidage (23) sont pourvues pour guider le déplacement rotatif et un déplacement axial de l'unité d'écran d'affichage (2).

6. Dispositif d'écran multimode (1) selon les revendications 4 ou 5,
**caractérisé en ce que** l'unité d'écran d'affichage (2) est déplacée entre l'orientation paysage (L) et l'orientation portrait (P) avec un moteur électrique (11) qui fait tourner l'arbre creux intérieur (18) par l'intermédiaire d'un arbre d'entraînement (12) et d'un pignon (13).

7. Dispositif d'écran multimode (1) selon la revendication 6,
**caractérisé en ce que** l'écran d'affichage (8) est un écran tactile et **en ce que** le moteur électrique (11) est adapté pour faire vibrer l'unité d'écran d'affichage (2) afin de fournir une rétroaction haptique au conducteur du véhicule, lorsqu'une entrée est effectuée sur l'écran tactile.

8. Dispositif d'écran multimode (1) selon l'une quelconque des revendications précédentes,
**caractérisé en ce qu'**une unité de commande (16) commande le déplacement de l'unité d'écran d'affichage (2) .

9. Procédé pour fournir un dispositif d'écran multimode (1) dans un véhicule, où le dispositif d'écran multimode comprend une unité d'écran d'affichage (2) avec un écran d'affichage (8), le procédé comprenant les étapes suivantes :
commuter un état de fonctionnement de l'unité d'écran d'affichage (2) entre un premier mode de fonctionnement relatif à une fonctionnalité de conduite manuelle de véhicule et un second mode de fonctionnement relatif à une fonctionnalité de conduite autonome de véhicule, où l'écran d'affichage (8) a une orientation portrait (P) dans le premier mode de fonctionnement et une orientation paysage (L) dans le second mode de fonctionnement ;
déplacer par rotation l'unité d'écran d'affichage (2) entre l'orientation portrait (P) et l'orientation paysage (L).

10. Procédé pour fournir un dispositif d'écran multimode (1) dans un véhicule selon la revendication 9,
dans lequel l'unité d'écran d'affichage (2) est adaptée pour être automatiquement déplacée entre l'orientation portrait (P) et l'orientation paysage (L) lorsque le véhicule commute l'état de fonctionnement entre le premier mode de fonctionnement et le second mode de fonctionnement.

11. Procédé pour fournir un dispositif d'écran multimode (1) dans un véhicule selon la revendication 9 ou la revendication 10,
dans lequel l'unité d'écran d'affichage (2) est déplacée axialement dans une direction arrière (R), par rapport à la direction de déplacement avant du véhicule, avant d'être déplacée par rotation lors du passage de l'orientation portrait (P) à l'orientation paysage (L).

12. Procédé pour fournir un dispositif d'écran multimode (1) dans un véhicule selon la revendication 9 ou la revendication 10,
dans lequel l'unité d'écran d'affichage (2) est déplacée par rotation avant d'être déplacée axialement dans une direction avant (F), par rapport à la direction de déplacement avant du véhicule, lors du passage de l'orientation paysage (L) à l'orientation portrait (P).

13. Véhicule, dans lequel le véhicule (1) comprend un dispositif d'écran multimode (1) selon l'une quelconque des revendications 1 à 8.

14. Programme informatique comprenant des moyens de code informatique pour exécuter toutes les étapes de l'une quelconque des revendications 9 à 12 lorsque ledit programme est exécuté sur un ordinateur.

15. Produit programme informatique comprenant des moyens de code de programme stockés sur un support lisible par ordinateur pour exécuter toutes les étapes de l'une quelconque des revendications 9 à 12 lorsque ledit produit programme est exécuté sur un ordinateur.
